# EUROPEAN PATENT APPLICATION

(11) **EP 1 503 135 A1**
(43) Date of publication of application: **02.02.2005**
(21) Application number: 03425393.0
(22) Date of filing: 29.07.2003
(51) Int. Cl.: F17C 9/02, F17C 7/04

(54) **Method and apparatus for generating compressed air from liquefied air, for supplying compressed air to a tool**

(71) Applicant: Sincron S.r.l., 20124 Milano (IT)
(72) Inventor: Russo, Vitaliano, 20135 Milano (IT)
(74) Representative: Botti, Mario

(57) **Abstract**

An operating unit (1), particularly for urban yards extremely favourable from an ecological point of view, comprises a tool (3) supplied with compressed air, a liquid-air tank (28), and means (M) for gasifying the liquid air thus obtaining compressed air for supplying the tool.

## Description

### Field of Application

The present invention relates to an operating unit, particularly but not exclusively for an urban yard, of the type comprising a compressed air tool, e.g. a pneumatic drill.

As it is known, particularly in the field of urban yards, i.e. in the field of construction but covering a wide range of jobs, from demolition to building, from excavation to paving, and using a big number of types of pneumatic tools, from the pneumatic drill to the compactor, there exists the need of having a source of ecological compressed air, in practice little polluting.

### Prior Art

Tracked generators are currently in use, wherein a proper compressor is driven by a suitable inner combustion engine, usually by a diesel engine. These generators, although effective for the aim of providing a desired amount of compressed air at a desired temperature, release large volumes of exhaust gases and contribute to increase the general noise of the yard adding a background constant annoying noise to the noise produced each time by the single operating tools.

The underlying problem of this invention is to provide an operating unit as indicated, which satisfies the above-specified need simultaneously overcoming the drawbacks cited with reference to the prior art.

This problem is solved by an operating unit as indicated, which is characterised in that it comprises a tank of liquid air in communication with the tool, and means for gasifying the liquid air, thus obtaining compressed air.

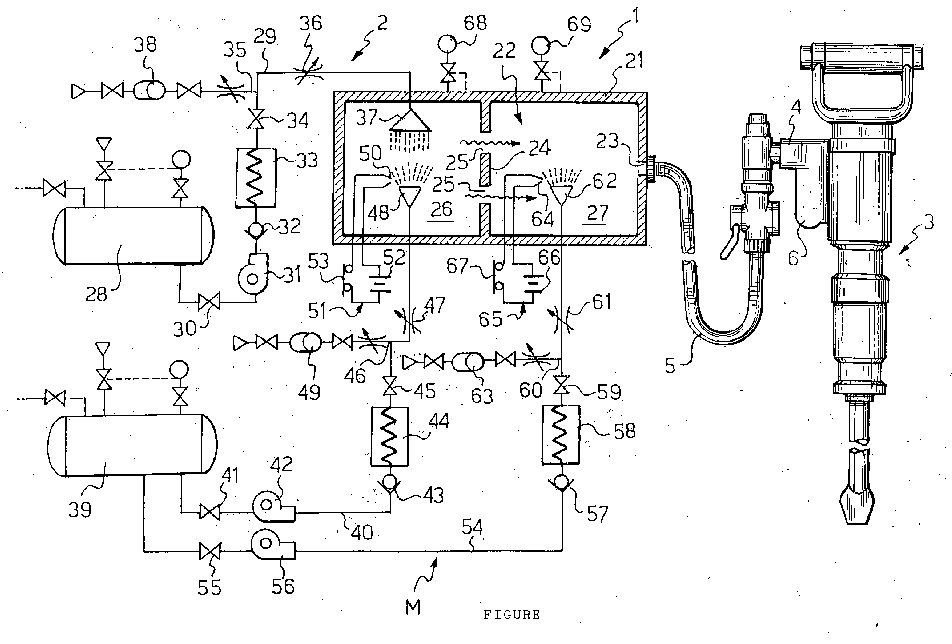

### Description of the Drawing

The figure shows a schematic view of an operating unit according to the invention.

### Detailed Description of the Invention

With reference to the figure, 1 globally indicates an operating unit according to the invention. The operating unit 1, particularly indicated for urban yards, comprises a generator of compressed air 2 and a compressed air tool 3, supplied with the compressed air from the generator 2. In the example, the compressed air tool 3 is a so called pneumatic drill provided with a fitting 4 for a flexible supply line 5 where the compressed air from the generator 2 arrives and an output 6 of the exhaust air.

The compressed-air generator 2 comprises a closed housing 21 wherein a gasification chamber 22 is formed. The gasification chamber 22 is in fluid communication with the supply line 5 through a port 23.

Preferably, the gasification chamber 22 is split, because of the provision in the housing of a wall 24 provided with perforations 25, into a first saturated-steam combustion chamber 26 and a second overheated steam combustion chamber 27, facing the port 23.

The compressed-air generator 2 comprises a liquid-air tank 28, in practice a cryogenic liquid-air cylinder.

The gasification chamber 22, and precisely the first chamber 26, is connected to the liquid-air tank 28 by piping 29. Along the piping 29, starting from the tank 28, a cutoff valve 30, a pump 31, a check valve 32, a heat exchanger 33, a cutoff valve 34, a branch line 35 and a flow control valve 36 are arranged and finally a diffuser 37 open in the first chamber is arranged at the end of the piping. The branch line 35 is provided with a settable accumulator 38.

In order to gasify liquid air the compressed-air generator 2 comprises gasifying means M, which include a liquid fuel tank 39. The liquid fuel may be liquid methane or another hydrocarbon, but preferably liquid hydrogen is used, in practice a cryogenic liquid-hydrogen cylinder.

The gasification chamber 22, and precisely the first chamber 26, is connected to the liquid-hydrogen tank 39 through a piping 40. Along the piping 40, starting from the tank 39, a cutoff valve 41, a pump 42, a check valve 43, a heat exchanger 44, a cutoff valve 45, a branch line 46, a flow control valve 47 and finally a diffuser 48 open in the first chamber and facing the diffuser 37 are open. The branch line 46 includes a settable accumulator 49.

The first chamber 26 is provided with a pilot igniter 50, which faces the diffuser 48. The pilot igniter 50 is supplied with an electric circuit 51, which comprises a power source 52 and switch 53.

The gasification chamber 22, and precisely the second chamber 27, is connected to the liquid-hydrogen tank 39 through a piping 54. Along the piping 54, substantially as described for the piping 40, a cutoff valve 55, a pump 56, a check valve 57, a heat exchanger 58, a cutoff valve 59, a branch line 60, a flow control valve 61 and finally a diffuser 62 are arranged. The branch line 60 is provided with a settable accumulator 63.

Also the second chamber 27 is provided with a pilot igniter 64. This faces the diffuser 62 and it is supplied by an electric circuit 65 comprising a power source 66 and switch 67.

The power sources 52 and 66 are in practice common batteries conventionally rechargeable by a dynamo, not shown, driven by the engine.

The accumulators 38, 49 and 63 are conventional and are all provided with fill and cutoff valves and a throttle.

Also tanks 28 and 39 are conventional and both provided with vent and fill valve and pressure gauge with respective cutoff valves.

Pressure gauges 68, 69 and preferably pressure transducers, are provided on each chamber 26 and 27.

In operation, in the gasification chamber 22, and precisely in the first chamber 26, air and hydrogen from the respective tanks 28 and 39, under effect of the respective pumps 31 and 42, are diffused therein come in contact with each other. Due to the presence of the pilot igniter 50 the combustion of the hydrogen with part of the air and more exactly with the oxygen of part thereof takes place. This combustion takes place under saturated-steam conditions: the first chamber 26 now contains oxygen-depleted air and saturated steam, both at the same pressure, substantially between 10 and 30 atmospheres and preferably 20 atmospheres.

These gases pass from the first chamber 26 into the second chamber 27, through the perforations 25 in the wall 24.

The combustion continues in the second chamber 27, for diffusion of hydrogen therein, coming from the same tank 39 under effect of the pump 56, because of the presence of the pilot igniter 64, with further part of the air and more exactly with the oxygen of further part thereof. The second chamber 27 now contains a mixture of air, further depleted of oxygen and of overheated steam, both at the same pressure, substantially between 10 and 30 atmospheres, and preferably 20 atmospheres.

It should be noted that the liquid air, while passing through the heat exchanger 33 undergoes a starting gasification by extracting heat from the ambient atmosphere. Condensation and any freeze are thus prevented.

Likewise the liquid hydrogen undergoes a starting gasification while passing through heat exchanger 44 and through the heat exchanger 58.

Thanks to heat exchangers 33, 44, 58, which preliminarily perform a starting gasification of the liquid air and also of the liquid hydrogen by extracting heat from the ambient atmosphere, the amount of heat to be transmitted to the liquid air and hydrogen in order to gasify the liquid air by the combustion of the hydrogen with the oxygen of the liquid air itself is thus reduced.

It is to be noted that, thanks to settable accumulators 38, 49, 63 a stabilisation of possible pulses of the pressure values inside the gasification chamber is achieved.

This mixture derived from gasification of the liquid air and which is in practice compressed air, passes through the port 23 in the line 5 and herefrom to the fitting 4 in the tool 3, thus determining the operation and so being discharged to the atmosphere through the outlet 6 and almost at ambient pressure and temperature.

The present invention also relates to a method for generating compressed air for supplying a compressed air tool and to a generator of compressed air for implementing the method.

According to the invention, the method comprises the steps of providing liquid air and a fuel, preferably liquid and preferably liquid hydrogen, of gasifying the liquid air through combustion of the hydrogen with the liquid air oxygen and with the aid of a pilot igniter, thereby obtaining compressed air at a pressure of approximately 10 to 30 atmospheres and preferably 20 atmospheres and supplying the tool with the thus obtained compressed air. According to the method, a starting gasification takes place from the heat extracted from the ambient through a heat exchanger.

The main advantage of the operating unit according to the invention is its extremely favourable behaviour: in fact the required heat practically comes from the expansion of the compressed air obtained through liquid air gasification. This liquid air is previously obtained in several known ways in industrial places far from inhabited centres. As for its gasification in order to obtain compressed air, this is first obtained by the heat exchanger which extracts heat from the ambient, and then thanks to the combustion of a very small amount of fuel.

It is then to be noted that in the preferred embodiment wherein the liquid air gasification is performed through combustion of hydrogen, every small carbon pollutant is completely absent. Moreover, pollutants coming from nitrogen oxidation are completely absent.

A further advantage of the operating unit of the invention is an enhanced inner safety brought about by the dramatic reduction of combustible substances required for its operation.

A further advantage of the inventive operating unit is that it can be realised by using normal existing compressed air tools.

Obviously a skilled in the art can apply several modifications and variations to the engine unit, to the method and to the generator above-described, in order to satisfy occasional and specific needs, all of them included in the scope of the invention, as defined in the following claims.

## Claims

1. An operating unit, particularly for urban yards, comprising a tool (3) supplied with compressed air, **characterised in that** it comprises a tank (28) of liquid air in communication with the tool (3) and means (M) for gasifying the liquid air, thus obtaining compressed air.

2. An operating unit according to Claim 1, **characterised in that** the gasifying means (M) comprise a heat exchanger (33) between the liquid-air tank (28) and the tool (3) for a starting gasification of the liquid air.

3. An operating unit according to Claim 1, **characterised in that** the gasifying means (M) comprise a gasification chamber (22) in communication with the liquid-air tank (28) and a liquid fuel tank (39) in communication with the gasification chamber (22), for combustion of the liquid fuel with the liquid air oxygen.

4. An operating unit according to Claim 3, **characterised in that** the liquid fuel is liquid hydrogen.

5. An operating unit according to Claim 3, **characterised in that** the gasifying means (M) comprise a pilot igniter (50,64) inside said gasification chamber (22) to promote said combustion.

6. An operating unit according to Claim 1, **characterised in that** the gasifying means (M) comprise a pump (31) between the liquid-air tank (28) and the tool (3).

7. An operating unit according to Claim 3, **characterised in that** it comprises a pump (42,56) between the liquid fuel tank (39) and the gasification chamber (22).

8. An operating unit according to Claim 4, **characterised in that** it comprises a heat exchanger (44,58) between the tank (39) and the gasification chamber (22) for a starting gasification of the liquid hydrogen.

9. An operating unit according to Claim 3, **characterised in that** the gasification chamber (22) is split into a first gasification chamber (26) and a second gasification chamber (27) for combustion of the liquid fuel with the oxygen of the air under conditions of saturated steam and overheated steam respectively.

10. A method for generating compressed air, for supplying a tool (3) particularly for an urban yard, **characterised in that** it comprises the step of liquid air gasification and so obtaining compressed air and supplying the tool (3) with said compressed air.

11. A method according to Claim 10, **characterised in that** the gasification is achieved by a heat exchanger extracting heat from the ambient atmosphere.

12. A method according to Claim 10, **characterised in that** the gasification is achieved through combustion of a predetermined small amount of a liquid fuel.

13. A method according to Claim 12, **characterised in that** the combustion takes place with said liquid air.

14. A method according to Claim 13, **characterised in that** the liquid fuel is liquid hydrogen.

15. A method according to Claim 12, **characterised in that** the combustion takes place in the presence of a pilot igniter.

16. A method according to Claim 12, **characterised in that** said predetermined small amount of liquid fuel is selected in order to obtain compressed air and at a predetermined pressure between 10 and 30 atmospheres and preferably 20 atmospheres.

17. A method according to Claim 12, **characterised in that** it comprises the step of performing a starting gasification of the liquid fuel in a heat exchanger (44,58).

18. A generator of compressed air for supplying a tool (3), particularly a tool for an urban yard and the like, **characterised in that** it comprises a liquid-air tank (28) and gasifying means (M) for gasifying the liquid air obtaining compressed air, in communication with the tool (3).

19. A generator according to Claim 18, **characterised in that** the gasifying means (M) comprise a heat exchanger (33) between the liquid-air tank (28) and the tool (3) for a starting gasification the liquid air.

20. A generator according to Claim 18, **characterised in that** the gasifying means (M) comprise a gasification chamber (22) in communication with the liquid-air tank (29), and a liquid fuel tank (39) in communication with the gasification chamber (22) for combustion of the liquid fuel with the oxygen of the liquid air.

21. A generator according to Claim 20, **characterised in that** the liquid fuel is liquid hydrogen.

22. A generator according to Claim 20, **characterised in that** the gasifying means (M) comprise a pilot igniter (50,64) in said gasification chamber (22) to promote said combustion.

23. A generator according to Claim 18, **characterised in that** the gasifying means (M) comprise a pump (31) between the liquid-air tank (28) and the tool (3).

24. A generator according to Claim 20, **characterised in that** it comprises a pump (42,56) between the liquid-fuel tank (39) and the gasification chamber (22).

25. A generator according to Claim 21, **characterised in that** it comprises a heat exchanger (44,58) placed between the tank (39) and the gasification chamber (22) for a starting gasification of the liquid hydrogen.

26. A generator according to Claim 20, **characterised in that** the gasification chamber (22) is split into a first gasification chamber (26) and a second gasification chamber (27) for combustion of the hydrogen with the oxygen of the air under conditions of saturated steam and overheated steam respectively.
